# FASCICULE DE BREVET EUROPEEN

(11) **EP 3 510 349 B1**
(45) Date de publication et mention de la délivrance du brevet: **22.11.2023**
(21) Numéro de dépôt: 17771500.0
(22) Date de dépôt: 08.09.2017
(51) Int. Cl.: G01B 5/20, G01B 21/20, G01B 5/213, G01B 11/00, G01B 11/24

(54) **PROCEDE DE CONTROLE DE LA CONFORMITE DU PROFIL D'UNE SURFACE COURBE D'UN ELEMENT D'UNE TURBOMACHINE**
VERFAHREN ZUR STEUERUNG DER KONFORMITÄT DES PROFILS EINER GEKRÜMMTEN OBERFLÄCHE EINES ELEMENTS EINER TURBOMASCHINE
METHOD FOR CONTROLLING THE CONFORMITY OF THE PROFILE OF A CURVED SURFACE OF A TURBOMACHINE ELEMENT

(30) Priorité: 08.09.2016 FR 1658343
(43) Date de publication de la demande: 17.07.2019
(73) Titulaire: Safran Aircraft Engines, 75015 Paris (FR)
(72) Inventeur: BEIGNON, Dominique, Maurice, Gérard, 77550 Moissy-Cramayel (FR); BERSON, Antoine, 77550 Moissy-Cramayel (FR)
(74) Mandataire: Regimbeau
(86) Numéro de dépôt international: PCT/FR2017/052386
(87) Numéro de publication internationale: WO 2018/046863

(56) Documents cités:
- WO-A2-2012/152255
- JP-A- H0 566 113
- US-A- 3 846 105
- US-A1- 2005 263 727
- US-A1- 2014 025 336
- US-B2- 8 718 975

## Description

### DOMAINE TECHNIQUE GÉNÉRAL

La présente invention concerne un procédé de contrôle de la conformité du profil d'une section d'une surface courbe d'un élément d'une turbomachine, par exemple d'une section d'une aube d'une turbomachine pour un aéronef, afin de vérifier que la section de la surface courbe dudit élément est bien conforme aux critères de fabrication établis lors de la conception dudit élément.

La présente invention peut ainsi notamment concerner un procédé de contrôle de la conformité du profil rayonné d'un bord d'attaque et/ou d'un bord de fuite de l'aube afin de vérifier que la forme du bord d'attaque et/ou du bord de fuite de l'aube est bien conforme aux critères de fabrication établis lors de la conception de l'aube.

### ETAT DE LA TECHNIQUE

Lors de la fabrication d'une surface courbe d'un élément d'une turbomachine, il est connu de procéder au contrôle de la conformité du profil d'une section de la surface courbe afin de vérifier si l'élément est bien conforme aux critères de fabrication établis lors de la conception dudit élément.

Ainsi, lors de la fabrication d'une aube d'une turbomachine pour un aéronef, par exemple une aube d'une soufflante ou d'une aube de compresseur, une étape de contrôle de la conformité de cette aube est effectuée afin de vérifier si la forme de ladite aube est conforme aux critères de fabrication qui ont été établis lors de la conception de ladite aube.

Le bord d'attaque et le bord de fuite de l'aube, et particulièrement le bord d'attaque, sont des zones de l'aube dont la forme possède un impact important sur le comportement aérodynamique de ladite aube. Ainsi, il est important que le bord d'attaque et le bord de fuite de l'aube possèdent une forme conforme à la forme définie lors de la conception de ladite aube, afin que ladite aube possède les caractéristiques aérodynamiques désirées.

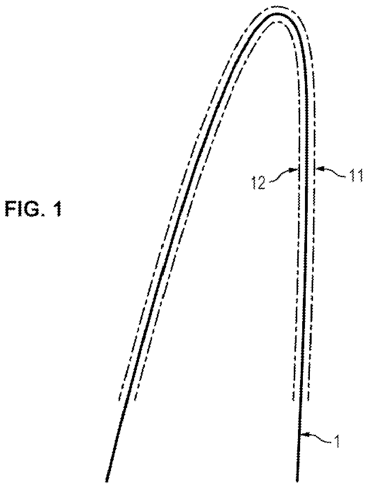

Selon un procédé connu illustré sur la figure 1, le contrôle de la conformité d'une aube 1 est réalisé en comparant l'aube 1 avec un profil d'aube maximum 11 et un profil d'aube minimum 12. Le profil maximum 11 correspond à l'épaisseur maximum autorisée pour l'aube 1, et le profil minimum 12 correspond à l'épaisseur minimum autorisée pour ladite aube 1. Le profil maximum 11 et le profil minimum 12 sont établis en appliquant un seuil de tolérance à l'épaisseur de l'aube optimale établie lors de la conception de l'aube 1.

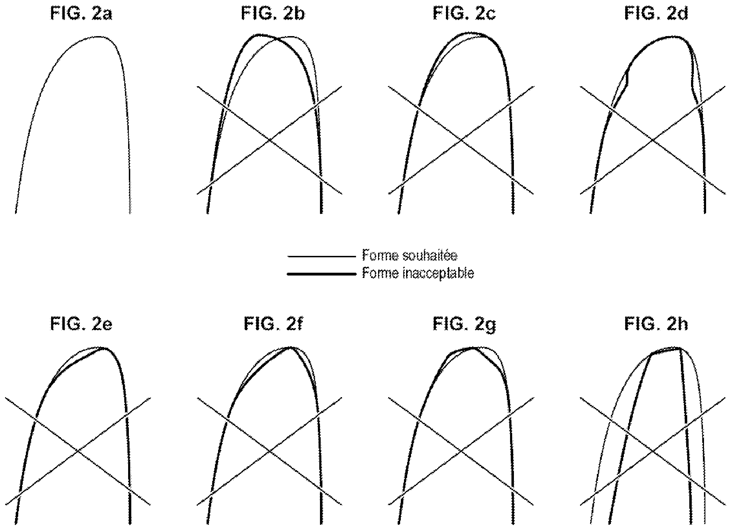

Toutefois, le procédé illustré sur la figure 1 permet de contrôler uniquement si l'épaisseur de l'aube 1 est bien comprise dans le seuil de tolérance défini par le profil maximum 11 et le profil minimum 12, et ne permet pas de détecter si le bord d'attaque ou le bord de fuite possède une forme rayonnée inacceptable, comme par exemple celles représentées sur la figure 2. Par exemple, le bord d'attaque, ou le bord de fuite de l'aube 1, peut avoir une forme inacceptable s'il est trop pointu tout en étant dans le seuil de tolérance acceptable.

Afin de contrôler le profil du bord d'attaque et le profil du bord de fuite de l'aube 1, un contrôle visuel par les opérateurs du contrôle qualité doit donc être effectué afin de comparer le profil du bord d'attaque et du bord de fuite avec des profils de formes inacceptables tels qu'illustrés sur les figures 2b à 2h, la figure 2a illustrant quant à elle le profil souhaité.

La figure 2b illustre un déport latéral de l'extrémité du bord d'attaque ou du bord de fuite. La figure 2c illustre un bord d'attaque ou un bord de fuite dont le profil est trop arrondi. La figure 2d illustre un bord d'attaque ou un bord de fuite comprenant des échancrures. La figure 2e illustre un bord d'attaque ou un bord de fuite comprenant un méplat. La figure 2f illustre un bord d'attaque ou un bord de fuite trop pointu car comprenant deux méplats formant une pointe. La figure 2g illustre un bord d'attaque ou un bord de fuite comprenant un léger méplat cumulé avec un léger déport latéral. Enfin la figure 2h illustre un bord d'attaque ou un bord de fuite trop mince.

Cependant, cette méthode de contrôle s'avère insuffisante pour apprécier correctement la conformité des aubes. Elle pose notamment des problèmes en termes de répétabilité et de reproductibilité.

On connait le document WO2012/152255 (qui correspond également au document US2014/0076038) qui décrit un procédé pour contrôler le profil d'une section d'une aube. Le contrôle du profil est réalisé en regardant si le profil mesuré de la section de l'aube est bien compris dans un intervalle de tolérance acceptable. Le procédé peut également comprendre une comparaison du rayon de courbure minimal de la section avec un rayon de courbure minimal théorique. Cependant, un tel procédé ne permet pas de détecter et de mettre en évidence tous les défauts que peut présenter une section d'un élément d'une turbomachine, notamment une aube. De plus, l'analyse du rayon de courbure minimal est focalisée sur le bord d'attaque ou le bord de fuite de l'aube.

Le document US8718975B2 décrit un procédé de validation d'une surface comprenant la définition d'un profil de surface souhaité, la détermination d'un profil mesuré de la surface, la détermination d'une courbure de la surface, la détermination d'une plage de valeurs de courbure acceptables entre des profils de tolérance de courbure supérieure et inférieure, l'invalidation de la surface si une valeur de courbure est en dehors de la plage de valeurs de courbure acceptables.

### PRÉSENTATION GÉNÉRALE DE L'INVENTION

Un but général de l'invention est de proposer un procédé de contrôle du profil d'une section d'une surface courbe qui ne présente pas les inconvénients de l'art antérieur.

Un autre but de l'invention est de proposer un procédé de contrôle qui soit fiable, indépendant des moyens de mesure, et qui permette une appréciation quantitative, objective et complète de la conformité de la surface courbe, et notamment du rayon de courbure du bord d'attaque et/ou du bord de fuite d'une aube.

Plus particulièrement, selon un premier aspect, l'invention concerne un procédé de contrôle de la conformité d'un profil d'une section d'une surface courbe d'un élément d'une turbomachine selon la revendication 1.

Une telle méthode permet d'une part de détecter facilement les défauts dans le profil de la section, et notamment dans le profil du bord d'attaque et/ou du bord de fuite de l'aube, les défauts apparaissant de manière plus nette en comparant la courbe d'évolution mesurée du rayon de courbure avec la courbe d'évolution théorique.

Le procédé selon l'invention est avantageusement complété par les caractéristiques suivantes, prises seules ou en une quelconque de leurs combinaisons techniquement possibles :
- le calcul du rayon de courbure en un point de mesure est effectué en mesurant le rayon d'un cercle passant par ledit point de mesure et les deux points de mesure qui suivent ledit point de mesure le long de la section ;
- l'étape de repérage d'au moins un point singulier comprend l'étape suivante :
   - discriminer les extremums locaux repérés en ne retenant comme point singulier uniquement un extremum dont la variation de la valeur du rayon courbure par rapport aux extremums voisins est supérieure à un seuil prédéterminé ;
- le procédé comprend les étapes suivantes :
   - mesurer, lorsqu'un unique point singulier est compté, la différence de rayon de courbure entre d'une part le point singulier et d'autre part un point particulier correspondant au minimum du rayon de courbure de la courbe d'évolution théorique du rayon de courbure ;
   - évaluer la conformité de la section en comparant la différence de rayon de courbure mesurée à l'étape précédente à un seuil de tolérance prédéterminé ;
- le procédé comprend l'étape suivante:
   - établir, lorsqu'uniquement deux points singuliers sont comptés, la section en tant que non conforme ;
- le procédé comprend les étapes suivantes :
   - mesurer, lorsqu'uniquement trois points singuliers sont comptés, la différence de rayon de courbure entre d'une part un point singulier parmi lesdits trois points singuliers ayant le rayon de courbure maximum, et d'autre part un point particulier correspondant au point de la courbe d'évolution théorique ayant la même position le long de la section que le point singulier ayant le rayon de courbure maximum ;
   - comparer cette différence de rayon de courbure avec une valeur seuil prédéterminée ;
   - mesurer, si la différence de rayon de courbure est inférieure à la valeur seuil, les paramètres suivants :
      * la distance le long de la section entre d'une part un point singulier parmi les trois points singuliers ayant le rayon de courbure minium, et d'autre part un point particulier ayant le rayon de courbure minium de la courbe d'évolution théorique ;
      * le signe de la différence de rayon de courbure entre d'une part le point singulier ayant le rayon de courbure minium, et d'autre part le point particulier ayant le rayon de courbure minimum ;
      * la différence de rayon de courbure entre d'une part le point singulier ayant le rayon de courbure minimum, et d'autre part un point particulier correspondant au point de la courbe d'évolution théorique ayant la même position le long de la section que le point singulier ayant le rayon de courbure minimum ;
   - évaluer la conformité de la section en comparant la distance, la différence de rayon de courbure, et le signe de la différence de rayon de courbure mesurés à l'étape précédente à des seuils de tolérances prédéterminés.
   - mesurer, si la différence de rayon de courbure est supérieure à la valeur seuil, la distance le long de la section entre les deux points singuliers autres que le point singulier ayant le rayon de courbure maximum ;
   - évaluer la conformité de la section en comparant la distance mesurée à l'étape précédente, ainsi que la différence de rayon de courbure entre d'une part le point singulier ayant le rayon de courbure maximum et d'autre part le point particulier de la courbe d'évolution théorique ayant la même position le long de la surface, à des seuils de tolérances prédéterminés ;
- le procédé comprend les étapes suivantes :
   - détecter une inversion de courbure en déterminant un centre d'un cercle passant par trois points de mesure et si ledit centre du cercle est situé à l'extérieur de la section ;
   - établir la section de l'aube en tant que non conforme si le centre du cercle est situé à l'extérieur de la section.

Selon un autre aspect, l'invention concerne également un procédé de contrôle de la conformité d'un profil d'un bord d'attaque et/ou d'un bord de fuite d'une aube d'une turbomachine comprenant l'étape suivante :
- mettre en oeuvre le procédé de contrôle de la conformité du profil d'une section d'une surface courbe d'un élément selon le premier aspect, dans lequel l'élément est l'aube et ladite surface courbe comprend le bord d'attaque et/ou le bord de fuite de ladite aube, ledit procédé de contrôle étant mis en oeuvre sur une pluralité de sections de ladite aube réparties le long de ladite aube.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente un procédé de contrôle du profil d'une section d'une aube selon l'état de la technique ;
- la figure 2a représente le profil souhaité pour le bord de fuite et le bord d'attaque d'une aube ;
- les figures 2b-2h représentent des profils de formes inacceptables pour le bord de fuite et le bord d'attaque d'une aube comparé avec le profil de la figure 2a;
- la figure 3 représente les étapes principales d'un procédé de contrôle de la conformité d'un profil d'une section du bord d'attaque et/ou du bord de fuite d'une aube ;
- la figure 4 représente une méthode d'acquisition possible des coordonnées de points de mesure ;
- la figure 5 représente une méthode possible pour le calcul du rayon de courbure de la zone contrôlée en chacun des points de mesure ;
- la figure 6 représente une courbe d'évolution mesurée du rayon de courbure de l'aube sur la zone contrôlée ;
- la figure 7a représente la superposition du profil mesuré de la zone contrôlée d'une aube qui présente un présente un défaut avec un profil théorique de ladite zone de l'aube telle que conçue ;
- la figure 7b représente la superposition de la courbe d'évolution mesurée du rayon de courbure de la zone correspondant au profil mesuré de la figure 7a, avec une courbe d'évolution théorique du rayon de courbure du profil théorique de la figure 7a ;
- la figure 8a représente la superposition du profil mesuré de la zone contrôlée d'une aube qui présente un présente un défaut avec le profil théorique de ladite zone de l'aube telle que conçue ;
- la figure 8b représente la superposition de la courbe d'évolution mesurée du rayon de courbure de la zone correspondant au profil mesuré de la figure 8a, avec une courbe d'évolution théorique du rayon de courbure du profil théorique de la figure 8a ;
- la figure 9a représente la superposition du profil mesuré de la zone contrôlée d'une aube qui présente un présente un défaut avec le profil théorique de la zone de l'aube telle que conçue ;
- la figure 9b représente la superposition de la courbe d'évolution mesurée du rayon de courbure de la zone correspondant au profil mesuré de la figure 9a, avec une courbe d'évolution théorique du rayon de courbure du profil théorique de la figure 9a ;
- la figure 10 représente une variante possible des étapes de comparaison et d'évaluation du procédé de contrôle du profil d'une section d'une aube ;
- la figure 11a représente la superposition du profil mesuré de la zone contrôlée d'une aube qui présente un présente un défaut avec un profil théorique de ladite zone de l'aube telle que conçue ;
- la figure 11b représente la superposition de la courbe d'évolution mesurée du rayon de courbure de la zone correspondant au profil mesuré de la figure 11a, avec une courbe d'évolution théorique du rayon de courbure du profil théorique de la figure 11a, les points singuliers de la courbe d'évolution mesurée étant repérés ;
- la figure 12 représente une variante possible de l'étape de repérage d'au moins un point singulier de la courbe d'évolution mesurée du rayon de courbure ;
- la figure 13 représente une variante possible de l'étape de mesure des paramètres de conformité et de l'étape d'évaluation de la conformité de la section de l'aube ;
- la figure 14a représente la superposition du profil mesuré de la zone contrôlée d'une aube qui présente un présente un défaut avec le profil théorique de ladite zone de l'aube telle que conçue ;
- la figure 14b représente la superposition de la courbe d'évolution mesurée du rayon de courbure de la zone correspondant au profil mesuré de la figure 14a, avec une courbe d'évolution théorique du rayon de courbure du profil théorique de la figure 14a, le paramètre de conformité mesuré étant représenté ;
- la figure 15a représente la superposition du profil mesuré de la zone contrôlée d'une aube qui présente un présente un défaut avec le profil théorique de ladite zone de l'aube telle que conçue ;
- la figure 15b représente la superposition de la courbe d'évolution mesurée du rayon de courbure de la zone correspondant au profil mesuré de la figure 15a, avec une courbe d'évolution théorique du rayon de courbure du profil théorique de la figure 15a, les paramètres de conformité mesurés étant représentés ;
- la figure 16a représente la superposition du profil mesuré de la zone contrôlée d'une aube qui présente un présente un défaut avec le profil théorique de ladite zone de l'aube telle que conçue ;
- la figure 16b représente la superposition de la courbe d'évolution mesurée du rayon de courbure de la zone correspondant au profil mesuré de la figure 16a, avec une courbe d'évolution théorique du rayon de courbure du profil théorique de la figure 16a, les paramètres de conformité mesurés étant représentés ;
- la figure 17 représente une méthode possible de détection d'inversion du rayon de courbure de la zone de la section de l'aube contrôlée ;
- la figure 18 représente une aube et les différentes lignes des sections sur lesquelles le procédé de contrôle de la conformité du profil du bord d'attaque et/ou du bord de fuite au niveau desdites sections peut être mis en oeuvre afin de contrôler la conformité du profil du bord d'attaque et/ou du bord de fuite de ladite aube.

### DESCRIPTION D'UN OU PLUSIEURS EXEMPLES DE MODE DE REALISATION

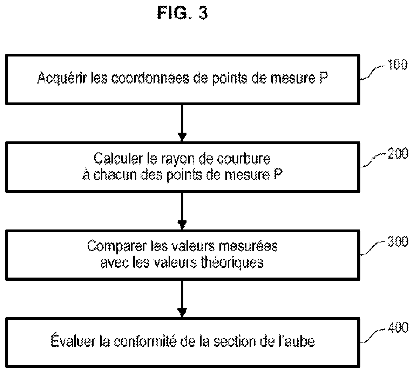

On a représenté sur la figure 3 un procédé de contrôle de la conformité d'un profil d'une section du bord d'attaque et/ou du bord de fuite d'une aube 2 d'une turbomachine.

Le procédé de contrôle comprend les étapes suivantes :
- étape 100 : acquérir des coordonnées de plusieurs points de mesure de la section d'un bord d'attaque et/ou d'un bord de fuite de l'aube 2 dans un référentiel défini pour ladite section ;
- étape 200 : calculer à partir des coordonnées de ces points de mesure P le rayon de courbure de l'aube 2 en chacun de ces points, de sorte à obtenir une courbe d'évolution mesurée Cm du rayon de courbure suivant la position des points de mesure P le long de la section du bord d'attaque et/ou du bord de fuite ;
- étape 300 : comparer la courbe d'évolution mesurée Cm du rayon de courbure obtenue à l'étape de calcul 200 avec une courbe d'évolution théorique Ct du rayon de courbure de la section de l'aube 2 prédéterminée ;
- étape 400 : évaluer la conformité de la section de l'aube 2 à partir de la comparaison réalisée à l'étape de comparaison 300.

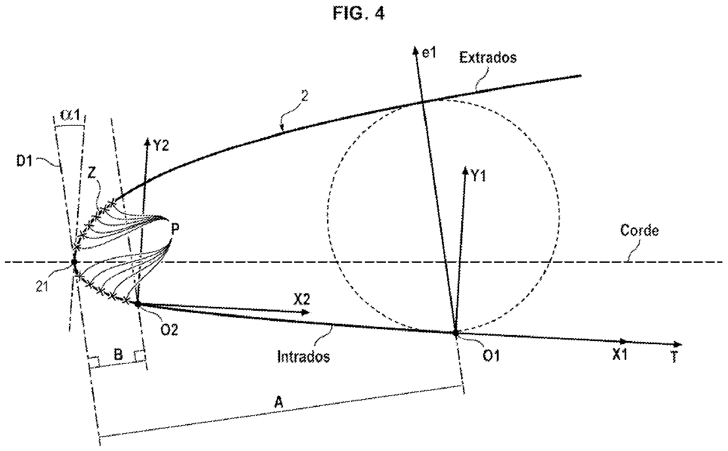

On a représenté sur la figure 4 un exemple de méthode d'acquisition possible des coordonnées de points de mesure qui peut être utilisé pour mettre en oeuvre l'étape 100 du procédé de contrôle.

Sur la figure 4, est représentée une section d'une aube 2 normale à l'axe d'empilage de ladite aube 2.

La section de l'aube 2 est définie notamment par :
- un point de bord d'attaque 21 ;
- un point de bord de fuite (non représenté sur la figure 4) ;
- un angle α1 qui définit, par rapport à la perpendiculaire à la corde, la direction d'une tangente D1 au point de bord d'attaque 21 ;
- une valeur e1 de l'épaisseur de l'aube 2 à une distance théorique prédéterminée de la tangente D1 au point de bord d'attaque 21, cette distance étant par exemple de l'ordre de 3 à 5 mm.

La corde est une droite caractéristique de l'aube 2 qui est définie en tant que la droite qui relie le point de bord d'attaque 21 au point de bord de fuite.

Un référentiel est défini localement pour la section de l'aube 2 afin de pouvoir mesurer les coordonnées des points de mesure P dans ce référentiel propre à cette section de l'aube 2.

Ce référentiel local est, dans l'exemple illustré sur la figure 4, un premier repère cartésien défini de la manière suivante :
- un premier point d'origine des axes O1 se trouve sur le côté intrados de l'aube 2, à une distance A de la droite D1 donnée pour l'épaisseur e1 dans la définition technique de l'aube 2 (A étant égal à 3 mm dans l'exemple illustré sur la figure 4) ;
- un premier axe d'abscisse X1 correspond à l'axe passant par le premier point d'origine des axes O1 et qui est tangent à l'aube 2 au niveau de ce premier point d'origine des axes O1 ;
- un premier axe d'ordonnée Y1 est l'axe passant par le premier point d'origine des axes O1 et qui est perpendiculaire au premier axe d'abscisse X1.

Par la suite, afin de ne contrôler que la zone de l'intrados et de l'extrados de l'aube 2 qui est proche du point de bord d'attaque 21, un changement de repère est effectué afin de recentrer la mesure des coordonnées de points de mesure P sur le point de bord d'attaque 21.

Pour faire ce changement de repère, un second repère cartésien est défini, le second repère cartésien comprenant :
- un second point d'origine des axes O2 est défini sur la surface d'intrados de l'aube 2, à une distance B de la droite D1 inférieure à la distance e1 (B étant égale à 0,5 mm dans l'exemple de la figure 4). La distance B entre le second point d'origine des axes O2 et la droite D1 est adaptée en fonction du profil de l'aube 2 et est choisie de sorte à couvrir les portions de l'intrados et de l'extrados de ladite aube 2 sur lesquelles la variation de la courbure de l'aube est la plus importante.
- un second axe d'abscisse X2 qui correspond à l'axe passant par le second point d'origine des axes O2 et qui parallèle au premier axe d'abscisse X1 ;
- un second axe d'ordonnée Y2 qui est l'axe passant par le second point d'origine des axes O2 et qui est parallèle au premier axe d'ordonnée Y1.

La portion de la section de l'aube 2 qui est contrôlée par le procédé de contrôle est la zone Z de la section de l'aube 2 qui, partant est située jusqu'à au plus la distance B du bord d'attaque 21 (la distance B étant égale à 0,5 mm dans l'exemple de la figure 4).

Un échantillonnage est ensuite réalisé sur la zone Z de la section de l'aube 2 pour obtenir les différents points de mesure P: ceux-ci sont par exemple choisis comme étant les points d'intersection avec la courbe d'intrados et la courbe d'extrados de différentes parallèles à la droite D1, espacées les unes par rapport aux autres d'un pas d'échantillonnage donné (0,05 mm par exemple).

Les coordonnés de ces différents points de mesure P peuvent être obtenues de différentes façons : palpage mécanique, mesure optique, etc.

L'exemple donné à la figure 4 est utilisé au niveau du bord d'attaque 21 de ladite aube 2. Toutefois, l'exemple illustré à la figure 4 peut être aisément être transposé afin d'être utilisé pour acquérir des coordonnées de points de mesure sur un bord de fuite de l'aube 2.

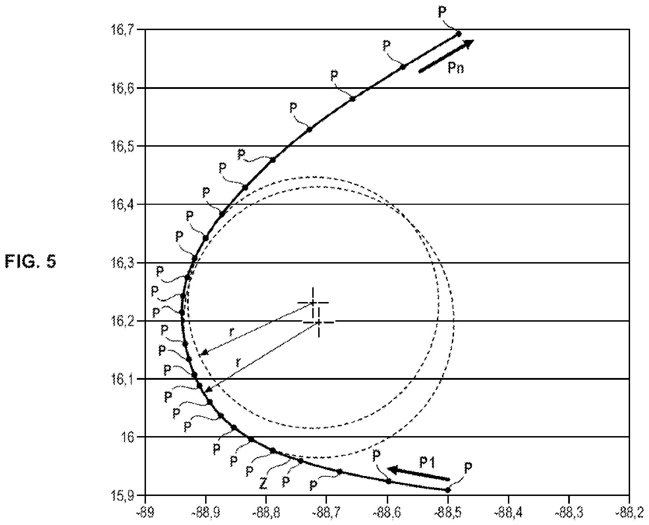

On a représenté sur la figure 5 un exemple de méthode possible pour le calcul du rayon de courbure de la zone Z contrôlée en chacun des points de mesure P, afin de mettre en oeuvre l'étape 200 du procédé de contrôle.

Ainsi, comme illustré sur la figure 5, les points de mesure P sont répartis le long de la zone Z du point P1 (extrémité intrados) au point Pn (extrémité extrados).

Pour chaque triplet de points de mesure (Pi, Pi+1, Pi+2), pour i allant de 1 à n-2, le cercle Ci passant par les trois points de mesure Pi, Pi+1, et Pi+2 est déterminé.

Le rayon de courbure au point Pi est calculé en mesurant le rayon Ri du cercle Ci passant par les trois points Pi, Pi+1, et Pi+2.

Ainsi, en déplaçant le cercle Ci le long de la zone Z, le rayon de courbure de l'aube 2 en chacun des points de mesure P est calculé.

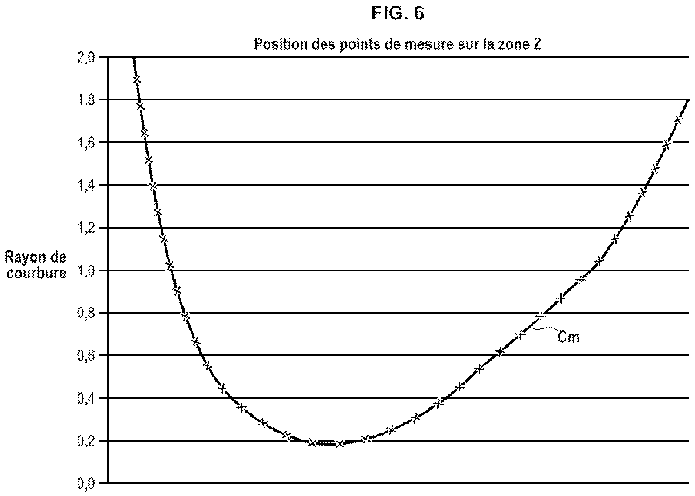

Le calcul du rayon de courbure de l'aube 2 en chacun des points de mesure P permet d'obtenir une courbe d'évolution mesurée Cm du rayon de courbure de l'aube 2 sur la zone Z, comme représenté sur la figure 6.

La courbe d'évolution mesurée Cm possède en ordonnée le rayon de courbure en chacun des points de mesure P, et en abscisse la position des points de mesure P le long de la zone Z suivant une abscisse curviligne.

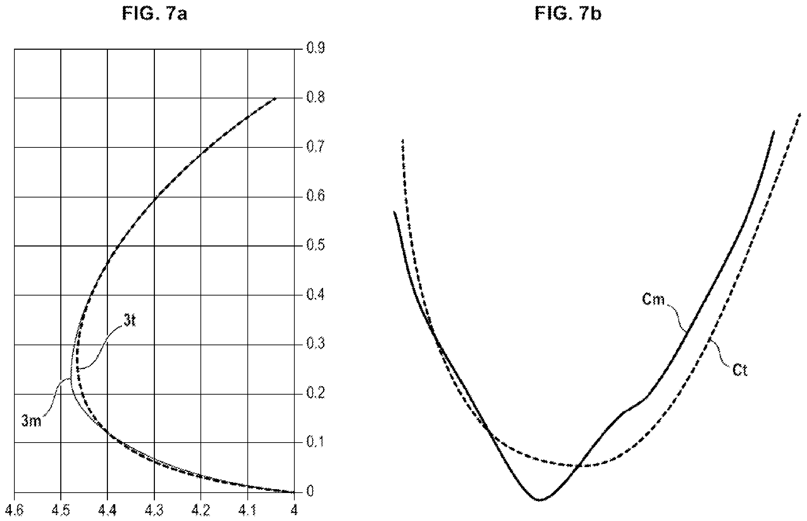

Comme illustré sur les figures 7a, 7b, 8a, 8b et 9a, 9b, les différents types de défauts que peut posséder la zone Z sont visibles de manière différentes sur la courbe d'évolution mesurée Cm.

La figure 7a représente la superposition du profil mesuré 3m de la zone Z d'une aube 2 qui présente un présente un défaut avec un profil théorique 3t de la zone Z de l'aube 2 telle que conçue. Comme visible sur la figure 7a, l'aube 2 est trop pointu au niveau du point de bord d'attaque 21.

La figure 7b représente la superposition de la courbe d'évolution mesurée Cm de la zone Z correspondant au profil mesuré 3m de la figure 7a, avec une courbe d'évolution théorique Ct du rayon de courbure du profil théorique 3t de la figure 7a. Comme visible sur la figure 7b, la courbe d'évolution mesurée Cm possède une forme de U dans ce cas.

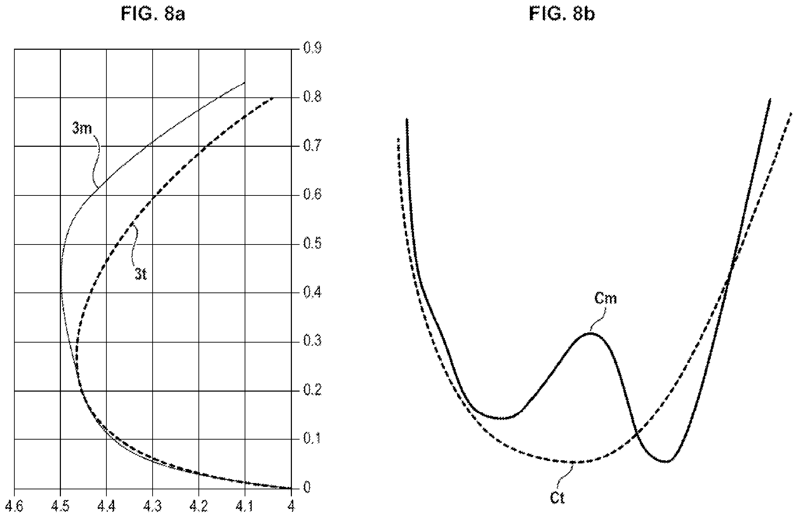

La figure 8a représente la superposition du profil mesuré 3m de la zone Z d'une aube 2 qui présente un présente un défaut avec le profil théorique 3t de la zone Z de l'aube 2 telle que conçue. Comme visible sur la figure 8a, l'aube 2 possède un point de bord d'attaque 21 déporté par rapport au point de bord d'attaque théorique.

La figure 8b représente la superposition de la courbe d'évolution mesurée Cm de la zone Z correspondant au profil mesuré 3m de la figure 8a, avec une courbe d'évolution théorique Ct du rayon de courbure du profil théorique 3t de la figure 8a. Comme visible sur la figure 8b, la courbe d'évolution mesurée Cm possède une forme de W dans ce cas.

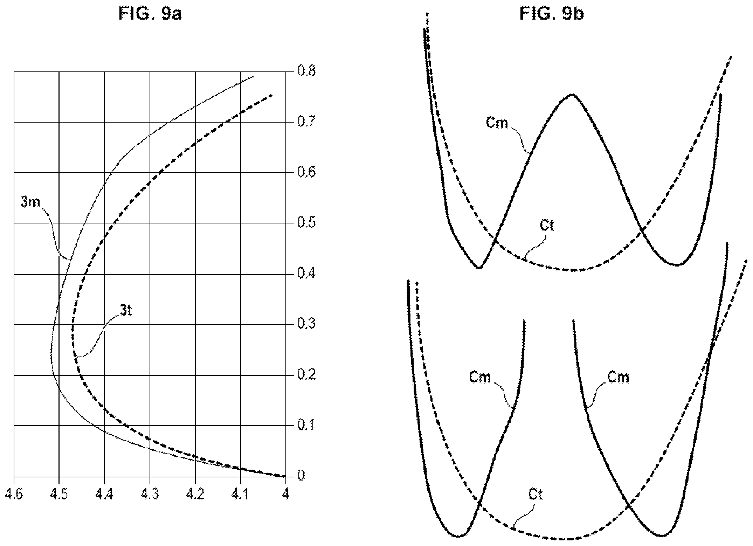

La figure 9a représente la superposition du profil mesuré 3m de la zone Z d'une aube 2 qui présente un présente un défaut avec le profil théorique 3t de la zone Z de l'aube 2 telle que conçue. Comme visible sur la figure 9a, la zone Z de l'aube 2 possède une portion aplanie par rapport au profil théorique 3t.

La figure 9b représente la superposition de la courbe d'évolution mesurée Cm de la zone Z correspondant au profil mesuré 3m de la figure 9a, avec une courbe d'évolution théorique Ct du rayon de courbure du profil théorique 3t de la figure 9a. Comme visible sur la figure 9b, la courbe d'évolution mesurée Cm possède soit une forme de W, soit une forme en double U lorsque la zone Z est trop plane. Selon une variante possible, la valeur seuil de rayon de courbure est de 2 mm pour qu'il soit considéré que le profil mesuré 3m comprenne un méplat, et donc que ledit profil mesuré soit en forme de double U.

Comme visible sur les figures 7a, 7b, 8a, 8b et 9a, 9b, la courbe d'évolution théorique Ct du rayon de courbure de la zone Z possède toujours un profil en U.

Le procédé de contrôle propose de déterminer le type de défaut que possède la zone Z de l'aube 2 à mesurer afin de pouvoir mesurer les paramètres pertinents pour l'évaluation de la conformité de l'aube 2 suivant le défaut dans le profil de la zone Z. En effet, si le défaut est mineur, l'aube 2 peut être tout de même conforme car ladite aube 2 possède les caractéristiques aérodynamiques nécessaires au bon fonctionnement de la turbomachine.

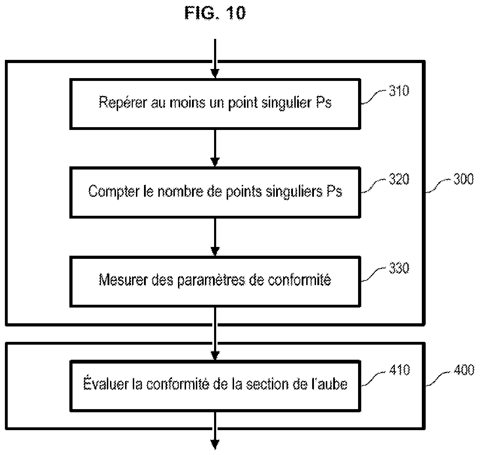

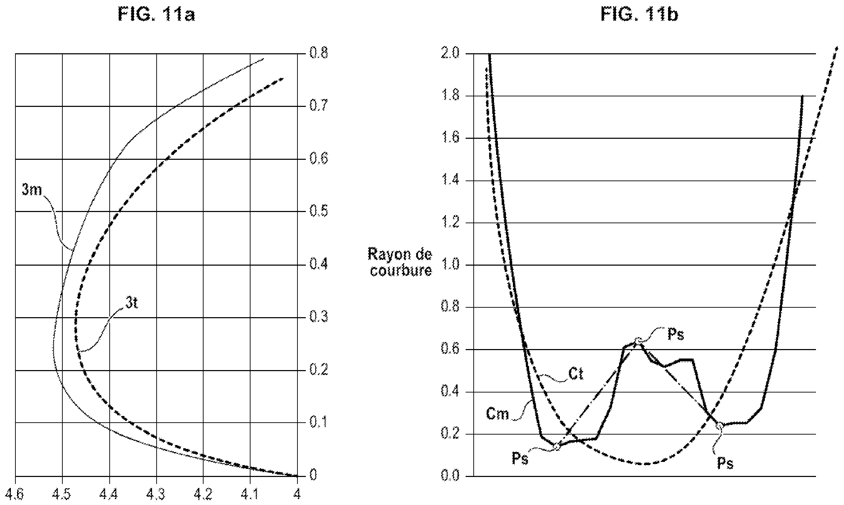

Pour ce faire, afin de distinguer les différents profils de courbe d'évolution mesurée Cm du rayon de courbure (U, W, ou double U), l'étape 300 de comparaison possède l'étape suivante, comme illustré sur les figures 10, 11a et 11b :
- étape 310 : repérer au moins un point singulier Ps dans la courbe d'évolution mesurée Cm du rayon de courbure. Un point singulier Ps est un point de mesure P qui correspond à un extremum local de la courbe d'évolution mesurée Cm.

Les extremums locaux parmi les points de mesure P peuvent par exemple être repérés par détection des points de mesure P dont la dérivée de la courbe d'évolution mesurée Cm en ces points est nulle.

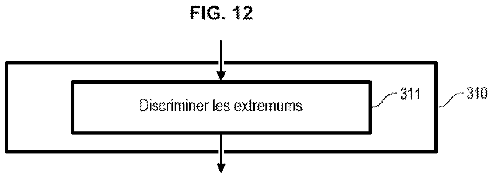

De plus, l'étape 310 de repérage des points singuliers Ps peut comprendre l'étape suivante, comme illustré sur la figure 12 :
- étape 311 : discriminer les extremums locaux repérés en ne retenant comme point singulier Ps qu'un extremum dont la variation de la valeur du rayon courbure par rapport aux extremums voisins est supérieure à un seuil prédéterminé.

Une telle étape de discrimination des extremums permet de ne pas retenir comme point singulier les ondulations que peut posséder le profil de la zone Z de la section de l'aube 2, et de retenir uniquement comme point(s) singulier(s) Ps le(s) point(s) de mesure P représentant de véritable(s) maximum et/ou minium au vue de la forme générale de la courbe d'évolution mesurée Cm.

L'étape 300 de comparaison possède également l'étape suivante, comme illustré sur la figure 10 :
- étape 320 : compter le nombre de points singuliers repérés à l'étape 310.

Une telle étape permet de déterminer le type de défaut que possède le profil de la zone Z de l'aube Z parmi les différents défauts possibles.

Ainsi, pour un profil en U, la courbe d'évolution mesurée Cm du rayon de courbure de la zone Z comprend un unique minimum formant un unique point singulier Ps.

Pour un profil en W, la courbe d'évolution mesurée Cm comprend uniquement deux minimums et un maximum, formant ainsi uniquement trois points singuliers Ps. Deux des points singuliers Ps correspondent chacun à minimum, et le point singulier Ps restant qui est situé entre les deux autres points singuliers Ps correspond au maximum.

Pour un profil en double U, la courbe d'évolution mesurée Cm comprend uniquement deux minimums, formant ainsi deux uniques points singuliers Ps, chaque point singulier PS correspondant à un minimum.

Le fait de savoir le nombre de points singuliers, et donc le type de défaut que présente le profil de la zone Z de l'aube 2, permet de déterminer quels sont les paramètres pertinents à mesurer en comparant la courbe d'évolution mesurée Cm avec la courbe d'évolution théorique Ct afin d'estimer l'importance du défaut.

Ainsi, comme illustré sur la figure 10, l'étape 300 de comparaison possède également l'étape suivante :
- étape 330 : mesurer des paramètres de conformité en comparant les points singuliers Ps de la courbe d'évolution Cm à des points particuliers Pp de la courbe d'évolution théorique Ct du rayon de courbure du profil de la zone Z, les paramètres mesurés et les points particuliers Pp de la courbe d'évolution théoriques Ct dépendant du nombre de points singuliers Ps compté à l'étape 320 de comptage.

Comme illustré sur la figure 10, l'étape 400 d'évaluation de la conformité de la section de l'aube 2 comprend l'étape suivante :
- étape 410 : évaluer la conformité de la section de l'aube 2 en comparant les paramètres mesurés à l'étape 330 à des valeurs prédéterminées.

Cette étape 410 d'évaluation de la conformité de la section de l'aube permet de conclure si le bord d'attaque et/ou le bord de fuite de la section de l'aube 2 contrôlée présente un profil convenable par rapport au profil théorique établi lors de la conception de l'aube 2.

Les valeurs prédéterminées dépendent des paramètres mesurés lors de l'étape 330 de mesure, ainsi que de la tolérance donnée au profil de l'aube 2.

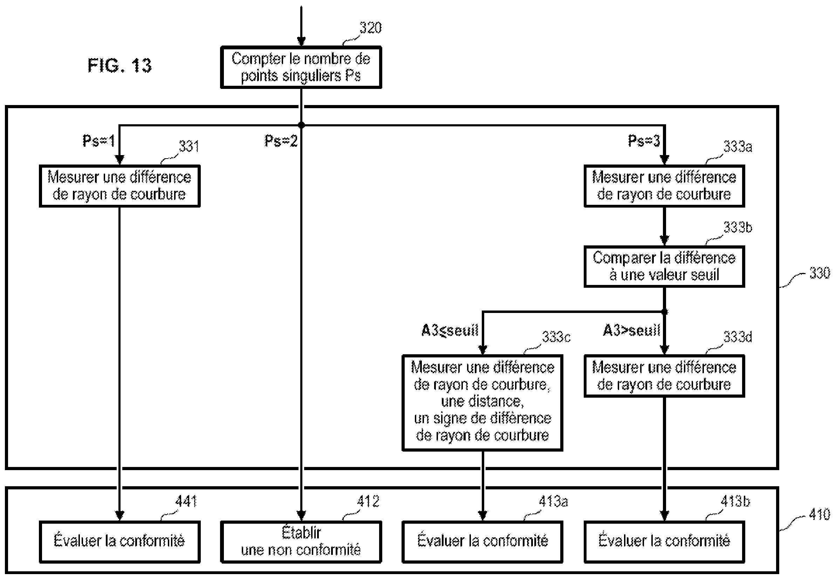

Comme illustré sur les figures 13, 14a, 14b, 15a, 15b, et 16a, 16b, l'étape 330 de mesure des paramètres de conformité peut comprend les étapes suivantes :
- étape 331 : mesurer, lorsqu'un unique point singulier Ps est compté, la différence de rayon de courbure S1 entre d'une part le point singulier Ps et d'autre part un point particulier Pp correspondant au minimum du rayon de courbure de la courbe d'évolution théorique Ct du rayon de courbure de la zone Z ;
- étape 333a : mesurer, lorsqu'uniquement trois points singuliers Ps sont comptés, la différence de rayon de courbure A3 entre d'une part un point singulier Ps parmi lesdits trois points singuliers Ps ayant le rayon de courbure maximum, et d'autre part un point particulier Pp correspondant au point de la courbe d'évolution théorique Ct ayant la même position le long de la section que le point singulier Ps ayant le rayon de courbure maximum ;
- étape 333b : comparer cette différence de rayon de courbure A3 avec une valeur seuil prédéterminée ;
- étape 333c : mesurer, si la différence de rayon de courbure A3 est inférieure ou égale à la valeur seuil, les paramètres suivants :
   * la distance L2 le long de la section entre d'une part un point singulier Ps parmi les trois points singuliers Ps ayant le rayon de courbure minimum, et d'autre part un point particulier Pp ayant le rayon de courbure minimum de la courbe d'évolution théorique Ct ;
   * le signe de la différence de rayon de courbure Dr entre d'une part le point singulier Ps ayant le rayon de courbure minium, et d'autre part le point particulier Pp ayant le rayon de courbure minimum ;
   * la différence de rayon de courbure A2 entre d'une part le point singulier Ps ayant le rayon de courbure minimum, et d'autre part un point particulier Pp correspondant au point de la courbe d'évolution théorique ayant la même position le long de la section que le point singulier Ps ayant le rayon de courbure minimum ;
- étape 333d : mesurer, si la différence de rayon de courbure A3 est supérieure à la valeur seuil, la distance L3 le long de la section entre les deux points singuliers Ps autres que le point singulier Ps ayant le rayon de courbure maximum.

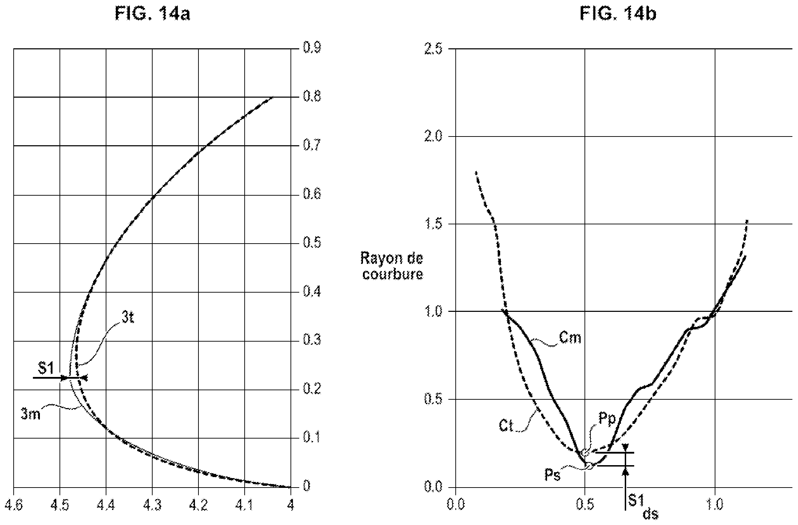

Les figures 14a et 14b illustrent la manière dont peut être mise en oeuvre l'étape 331 de mesure de la différence de rayon de courbure S1 en comparant la courbe d'évolution mesurée Cm et la courbe d'évolution théorique Ct.

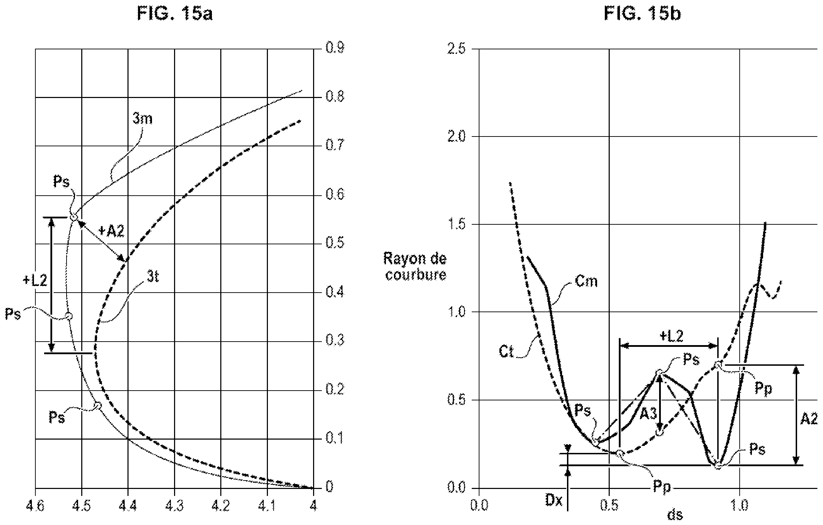

Les figures 15a et 15b illustrent la manière dont peuvent être mises en oeuvre les étapes 333a et 333c de mesure de la différence de rayon de courbure A3, de la distance L2, du signe de la différence de rayon de courbure Dr, et de la différence de rayon de courbure A2.

La différence de rayon de courbure Dr est positive si le rayon de courbure du point singulier Ps ayant le rayon de courbure minimum est supérieur au rayon de courbure du point particulier Pp ayant le rayon de courbure minimum de la courbe d'évolution théorique Ct.

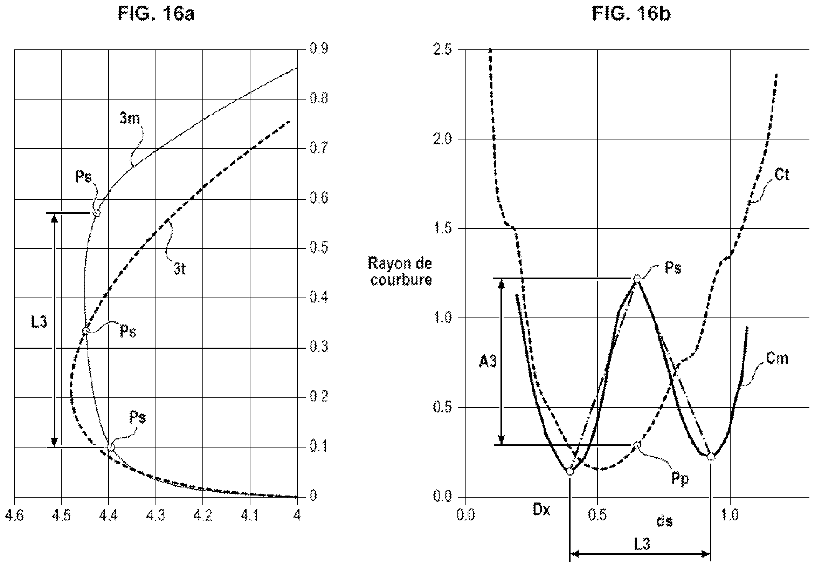

Les figures 16a et 16b illustrent la manière dont peuvent être mises en oeuvre les étapes 333a et 333d de mesure de la différence de rayon de courbure A3, et de la distance L3.

L'étape 410 d'évaluation de la conformité de la section du bord d'attaque et/ou du bord de fuite de l'aube 2 comprend les étapes suivantes :
- étape 411 : évaluer la conformité de la section l'aube 2, lorsqu'un unique point singulier Ps est compté, en comparant la différence de rayon de courbure S1 mesurée à l'étape 331 à un seuil de tolérance prédéterminé. Le seuil de tolérance pour la différence de rayon de courbure S1 est par exemple de 0,1mm.
- étape 413a : évaluer la conformité de la section l'aube 2, lorsqu'uniquement trois points singuliers sont comptés et que la différence de rayon de courbure A3 est inférieure ou égale à la valeur seuil, en comparant la distance L2, la différence de rayon de courbure A2, et le signe de la différence de rayon de courbure Dr mesurées à l'étape 333c à des seuils de tolérances prédéterminés. Le seuil de tolérance pour la différence de rayon de courbure A2 est par exemple de 0,3 mm. Le seuil de tolérance pour la longueur L2 est par exemple de 0,5mm. Le seuil de tolérance pour le signe de la différence de rayon de courbure Dr est que la différence de rayon de courbure Dr est négative (cas illustré sur les figures 15a et 15b.
- étape 413b : évaluer la conformité de la section l'aube 2, lorsqu'uniquement trois points singuliers sont comptés et que la différence de rayon de courbure A3 est supérieure à la valeur seuil, en comparant la distance L3 et la différence de rayon de courbure A3 mesurées à l'étape 333d à des seuils de tolérances prédéterminés. Le seuil de tolérance pour la différence de rayon de courbure A3 est par exemple de 2 mm. Le seuil de tolérance pour la longueur L3 est par exemple de 0,15mm.

Les valeurs des seuils de tolérance sont amenées à varier suivant les dimensions des aubes à contrôler.

Par ailleurs, comme visible sur la figure 13, lorsqu'uniquement deux points singuliers Ps sont comptés lors de l'étape 310 de comptage des points singuliers Ps de la courbe d'évolution mesurée Cm, le profil de la zone Z de la section de l'aube 2 est directement considéré comme non conforme ladite zone Z dans une étape 412 d'établissement d'une non-conformité.

En effet, la section Z possède un méplat trop important si uniquement 2 points singuliers Ps sont comptés.

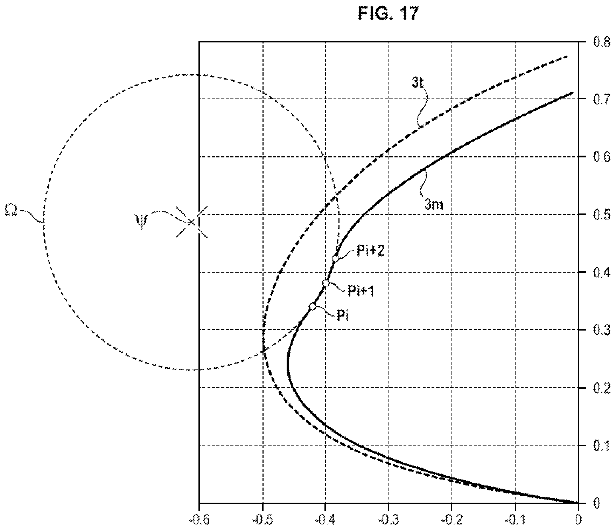

Selon une variante préférentielle illustrée sur la figure 17, le procédé de contrôle de la conformité du profil de la section du bord d'attaque et/ou du bord de fuite de l'aube 2 comprend les étapes suivantes afin de détecter une inversion de courbure dans ladite section :
- étape 510 : détecter une inversion de courbure en déterminant un centre ψ d'un cercle Ω passant par trois points de mesure P et si ledit centre ψ du cercle Ω est situé à l'extérieur de la section de l'aube 2 ;
- étape 520 : établir la section de l'aube 2 en tant que non conforme si le centre ψ du cercle Ω est situé à l'extérieur de la section de ladite aube 2.

Ainsi, sur l'exemple illustré sur la figure 17 le profil de la section du bord d'attaque de l'aube 2 comprend une inversion de courbure, le centre ψ du cercle Ω étant situé à l'extérieur de la section de l'aube 2.

Afin de vérifier l'absence d'inversion de courbure sur la zone Z de la section de l'aube 2, le cercle Ω et son centre ψ sont déplacés le long de ladite zone Z par triplet de points de mesure (Pi, Pi+1, Pi+2) en incrémentant i.

Selon une mise en oeuvre possible du procédé de la conformité du profil de la section de l'aube 2, ladite section est considérée comme non conforme si un des paramètres de conformité mesurés dans l'étape 330 n'est pas conforme à son seuil de tolérance, par exemple en étant supérieure à la valeur maximum, inférieure à la valeur minimum, si la longueur est trop importante, ou si le signe de la différence de rayon de courbure est différent du signe prédéterminé.

L'invention propose également un procédé de contrôle de la conformité du profil du bord d'attaque et/ou du bord de fuite de l'aube 2 sur tout le long de ladite aube 2, ou sur une portion uniquement.

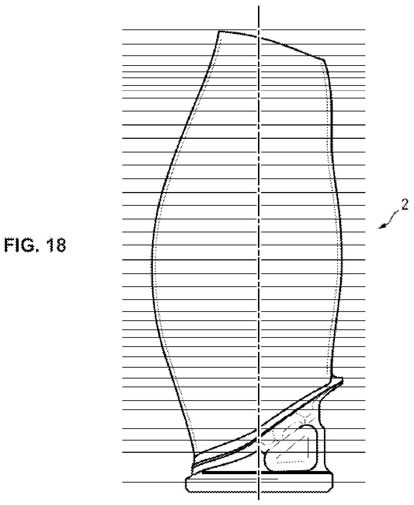

Pour ce faire, comme illustré à la figure 18, le procédé de contrôle de la conformité d'une section de l'aube 2 telle que décrit précédemment est effectué sur différentes sections Sc réparties le long de la hauteur de ladite aube 2.

Selon une mise en oeuvre possible du procédé de la conformité du profil du bord d'attaque et/ou du bord de fuite de l'aube 2, ledit profil est considéré comme non conforme si le procédé de contrôle de la conformité de du profil d'une section de l'aube 2 a conclu à la non-conformité d'une section de ladite aube 2. Le profil du bord d'attaque et/ou du bord de fuite de l'aube 2 est considéré comme conforme si aucun profil d'une section de l'aube 2 n'a été considéré comme non conforme.

Les exemples donnés précédemment de réalisation du procédé de contrôle de la conformité du profil d'une section d'une surface courbe d'un élément d'une turbomachine sont relatifs aux cas où l'élément est une aube de turbomachine et la surface courbe est le bord d'attaque et/ou le bord de fuite de ladite aube. Toutefois, le procédé de contrôle de la conformité du profil de la section de la surface courbe de l'élément de la turbomachine peut s'appliquer à d'autres éléments qu'une aube ou un redresseur (aubage fixe) dont la forme adaptée pour être aérodynamique impacte les performances de la turbomachine.

## Revendications

1. Procédé de contrôle de la conformité d'un profil d'une section d'une surface courbe d'un élément d'une turbomachine comprenant les étapes suivantes :
- (100) mesurer des coordonnées de plusieurs points de mesure (P) de la section dans un référentiel défini pour ladite section ;
**caractérisé en ce que** le procédé comprend les étapes suivantes :
- (200) calculer à partir des coordonnées de ces points de mesure (P) le rayon de courbure de la section en chacun de ces points, de sorte à obtenir une courbe d'évolution mesurée (Cm) du rayon de courbure suivant la position des points de mesure (P) le long de ladite section ;
- (300) comparer la courbe d'évolution mesurée (Cm) du rayon de courbure obtenue à l'étape (200) précédente avec une courbe d'évolution théorique (Ct) du rayon de courbure de la section qui est prédéterminée, avec les étapes suivantes
• (310) repérer au moins un point singulier (Ps) dans la courbe d'évolution mesurée (Cm) du rayon de courbure correspondant à un extremum local de ladite courbe d'évolution mesurée (Cm) ;
• (320) compter le nombre de points singuliers (Ps) repérés ;
• (330) mesurer des paramètres de conformité en comparant les points singuliers (Ps) à des points particuliers (Pp) de la courbe d'évolution théorique (Ct) du rayon de courbure, les paramètres mesurés et les points particuliers (Pp) de la courbe d'évolution théorique (Ct) dépendant du nombre de points singuliers (Ps) compté à l'étape (320) précédente ;
- (400) évaluer la conformité de la section de la surface courbe à partir de la comparaison réalisée à l'étape (300) précédente par (410) évaluation de la conformité de la section de la surface courbe en comparant les paramètres à des valeurs prédéterminées.

2. Procédé selon la revendication 1, dans lequel le calcul du rayon de courbure en un point de mesure (Pi) est effectué en mesurant le rayon d'un cercle passant par ledit point de mesure (Pi) et les deux points de mesure (Pi+1, Pi+2) qui suivent ledit point de mesure (Pi) le long de la section.

3. Procédé selon la revendication 1 ou 2, dans lequel l'étape de repérage (310) d'au moins un point singulier (Ps) comprend l'étape suivante :
- (311) discriminer les extremums locaux repérés en ne retenant comme point singulier (Ps) uniquement un extremum dont la variation de la valeur du rayon courbure par rapport aux extremums voisins est supérieure à un seuil prédéterminé.

4. Procédé selon l'une quelconque des revendications précédentes, dans lequel ledit procédé comprend les étapes suivantes :
- (331) mesurer, lorsqu'un unique point singulier (Ps) est compté, une différence de rayon de courbure (S1) entre d'une part le point singulier (Ps) et d'autre part un point particulier (Pp) correspondant au minimum du rayon de courbure de la courbe d'évolution théorique (Ct) du rayon de courbure ;
- (411) évaluer la conformité de la section de la surface courbe en comparant la différence de rayon de courbure mesurée à l'étape précédente (331) à un seuil de tolérance prédéterminé.

5. Procédé selon l'une quelconque des revendications précédentes, dans lequel ledit procédé comprend l'étape suivante :
- (412) établir, lorsqu'uniquement deux points singuliers (Ps) sont comptés, la section de la surface courbe en tant que non conforme.

6. Procédé selon l'une quelconque des revendications précédentes, dans lequel ledit procédé comprend les étapes suivantes :
- (333a) mesurer, lorsqu'uniquement trois points singuliers (Ps) sont comptés, une différence de rayon de courbure (A3) entre d'une part un point singulier (Ps) parmi lesdits trois points singuliers (Ps) ayant le rayon de courbure maximum, et d'autre part un point particulier (Pp) correspondant au point de la courbe d'évolution théorique (Ct) ayant la même position le long de la section que le point singulier (Ps) ayant le rayon de courbure maximum ;
- (333b) comparer cette différence de rayon de courbure (A3) avec une valeur seuil prédéterminée ;
- (333c) mesurer, si la différence de rayon de courbure (A3) est inférieure à la valeur seuil, les paramètres suivants :
* une distance (L2) le long de la section entre d'une part un point singulier (Ps) parmi les trois points singuliers (Ps) ayant le rayon de courbure minium, et d'autre part un point particulier (Pp) ayant le rayon de courbure minium de la courbe d'évolution théorique (Ct) ;
* un signe d'une différence de rayon de courbure (Dr) entre d'une part le point singulier (Ps) ayant le rayon de courbure minium, et d'autre part le point particulier (Pp) ayant le rayon de courbure minimum ;
* une différence de rayon de courbure (A2) entre d'une part le point singulier (Ps) ayant le rayon de courbure minimum, et d'autre part un point particulier (Pp) correspondant au point de la courbe d'évolution théorique (Ct) ayant la même position le long de la section que le point singulier (Ps) ayant le rayon de courbure minimum ;
- (413a) évaluer la conformité de la section de la surface courbe en comparant la distance (L2), la différence de rayon de courbure (A2), et le signe de la différence de rayon de courbure (Dr) mesurés à l'étape (333c) précédente à des seuils de tolérances prédéterminés.
- (333d) mesurer, si la différence de rayon de courbure (A3) est supérieure à la valeur seuil, une distance (L3) le long de la section entre les deux points singuliers (Ps) autres que le point singulier (Ps) ayant le rayon de courbure maximum ;
- (413b) évaluer la conformité de la section de la surface courbe en comparant la distance (L3) mesurée à l'étape précédente, ainsi que la différence de rayon de courbure (A3) entre d'une part le point singulier (Ps) ayant le rayon de courbure maximum et d'autre part le point particulier (Pp) de la courbe d'évolution théorique (Ct) ayant la même position le long de la surface, à des seuils de tolérances prédéterminés.

7. Procédé selon l'une quelconque des revendications précédentes, dans lequel ledit procédé comprend les étapes suivantes :
- (510) détecter une inversion de courbure en déterminant un centre (ψ) d'un cercle (Ω) passant par trois points de mesure (P) et si ledit centre (ψ) du cercle (Ω) est situé à l'extérieur de la section de la surface courbe ;
- (520) établir la section de la surface courbe en tant que non conforme si le centre (ψ) du cercle (Ω) est situé à l'extérieur de la section de ladite surface courbe.

8. Procédé de contrôle de la conformité d'un profil d'un bord d'attaque et/ou d'un bord de fuite d'une aube (2) d'une turbomachine comprenant l'étape suivante :
- mettre en oeuvre le procédé de contrôle de la conformité du profil d'une section d'une surface courbe d'un élément selon l'une quelconque des revendications 1 à 7, dans lequel l'élément est l'aube (2) et ladite surface courbe comprend le bord d'attaque et/ou le bord de fuite de ladite aube (2), ledit procédé de contrôle étant mis en oeuvre sur une pluralité de sections de ladite aube (2) réparties le long de ladite aube (2).

## Patentansprüche

1. Verfahren zur Kontrolle der Konformität eines Profils eines Abschnitts einer gekrümmten Oberfläche eines Elements einer Turbomaschine, die folgenden Schritten umfassend:
- (100) Messen der Koordinaten mehrerer Messpunkte (P) des Abschnitts in einem Bezugssystem, das durch den Abschnitt definiert ist;
**dadurch gekennzeichnet, dass** das Verfahren die folgenden Schritte umfasst:
- (200) Berechnen, ausgehend von den Koordinaten dieser Messpunkte (P), des Krümmungsradius des Abschnitts an jedem dieser Punkte, so dass eine gemessene Entwicklungskurve (Cm) des Krümmungsradius erhalten wird, der der Position der Messpunkte (P) entlang des Abschnitts folgt;
- (300) Vergleichen der gemessenen Entwicklungskurve (Cm) des Krümmungsradius, die im vorhergehenden Schritt (200) erhalten wurde, mit einer theoretischen Entwicklungskurve (Ct) des Krümmungsradius des Abschnitts, die vorbestimmt ist, mit den folgenden Schritten:
• (310) Erkennen von mindestens einem singulären Punkt (Ps) in der gemessenen Entwicklungskurve (Cm) des Krümmungsradius, der einem lokalen Extremum der gemessenen Entwicklungskurve (Cm) entspricht;
• (320) Zählen der Anzahl der erkannten singulären Punkte (Ps);
• (330) Messen von Konformitätsparametern durch Vergleichen der singulären Punkte (Ps) mit bestimmten Punkten (Pp) der theoretischen Entwicklungskurve (Ct) des Krümmungsradius, wobei die gemessenen Parameter und die bestimmten Punkte (Pp) der theoretischen Entwicklungskurve (Ct) abhängig von der Anzahl der singulären Punkte (Ps) sind, die im vorhergehenden Schritt (320) gezählt wurden;
- (400) Bewerten der Konformität des Abschnitts der gekrümmten Oberfläche ausgehend vom Vergleich, der im vorhergehenden Schritt (300) realisiert wurde, durch (410) Bewerten der Konformität des Abschnitts der gekrümmten Oberfläche durch Vergleichen der Parameter mit vorbestimmten Werten.

2. Verfahren nach Anspruch 1, wobei die Berechnung des Krümmungsradius an einem Messpunkt (Pi) durch Messen des Radius eines Kreises erfolgt, der durch den Messpunkt (Pi) verläuft, und der beiden Messpunkte (Pi+1, Pi+2), die dem Messpunkt (Pi) entlang des Abschnitts folgen.

3. Verfahren nach Anspruch 1 oder 2, wobei der Schritt zur Erkennung (310) von mindestens einem singulären Punkt (Ps) den folgenden Schritt umfasst:
- (311) Unterscheiden der erkannten lokalen Extrema, indem als singulärer Punkt (Ps) nur ein Extremum beibehalten wird, dessen Variation des Werts des Krümmungsradius in Bezug auf benachbarte Extrema größer ist als ein vorbestimmter Schwellenwert.

4. Verfahren nach einem der vorhergehenden Ansprüche, wobei das Verfahren die folgenden Schritte umfasst:
- (331) Messen, wenn ein einzelner singulärer Punkt (Ps) gezählt wird, einer Differenz des Krümmungsradius (S1) zwischen einerseits dem singulären Punkt (Ps) und andererseits einem bestimmten Punkt (Pp), der dem Minimum des Krümmungsradius der theoretischen Entwicklungskurve (Ct) des Krümmungsradius entspricht;
- (411) Bewerten der Konformität des Abschnitts der gekrümmten Oberfläche durch Vergleichen der im vorhergehenden Schritt (331) gemessenen Differenz des Krümmungsradius mit einem vorbestimmten Toleranzschwellenwert.

5. Verfahren nach einem der vorhergehenden Ansprüche, wobei das Verfahren den folgenden Schritt umfasst:
- (412) Festlegen, wenn nur zwei singuläre Punkte (Ps) gezählt werden, des Abschnitts der gekrümmten Oberfläche als nicht konform.

6. Verfahren nach einem der vorhergehenden Ansprüche, wobei das Verfahren die folgenden Schritte umfasst:
- (333a) Messen, wenn nur drei singuläre Punkte (Ps) gezählt werden, einer Differenz des Krümmungsradius (A3) zwischen einerseits einem singulären Punkt (Ps) unter den drei singulären Punkten (Ps), die den maximalen Krümmungsradius aufweisen, und andererseits einem bestimmten Punkt (Pp), der dem Punkt der theoretischen Entwicklungskurve (Ct) entspricht, der die gleiche Position entlang des Abschnitts aufweist wie der singuläre Punkt (Ps), der den maximalen Krümmungsradius aufweist;
- (333b) Vergleichen dieser Differenz des Krümmungsradius (A3) mit einem vorbestimmten Schwellenwert;
- (333c) Messen, wenn die Differenz des Krümmungsradius (A3) kleiner ist als der Schwellenwert, der folgenden Parameter:
* einen Abstand (L2) entlang des Abschnitts zwischen einerseits einem singulären Punkt (Ps) unter den drei singulären Punkten (Ps), die den minimalen Krümmungsradius aufweisen, und andererseits einem bestimmten Punkt (Pp), der den minimalen Krümmungsradius der theoretischen Entwicklungskurve (Ct) aufweist;
* ein Vorzeichen einer Differenz des Krümmungsradius (Dr) zwischen einerseits dem singulären Punkt (Ps), der den minimalen Krümmungsradius aufweist, und andererseits dem bestimmten Punkt (Pp), der den minimalen Krümmungsradius aufweist;
* eine Differenz des Krümmungsradius (A2) zwischen einerseits dem singulären Punkt (Ps), der den minimalen Krümmungsradius aufweist, und andererseits einem bestimmten Punkt (Pp), der dem Punkt der theoretischen Entwicklungskurve (Ct) entspricht, der die gleiche Position entlang des Abschnitts aufweist wie der singuläre Punkt (Ps), der den minimalen Krümmungsradius aufweist;
- (413a) Bewerten der Konformität des Abschnitts der gekrümmten Oberfläche durch Vergleichen des Abstands (L2), der Differenz des Krümmungsradius (A2) und des Vorzeichens der Differenz des Krümmungsradius (Dr), der im vorhergehenden Schritt (333C) gemessen wurde, mit vorbestimmten Toleranzschwellenwerten;
- (333d) Messen, wenn die Differenz des Krümmungsradius (A3) größer ist als der Schwellenwert, eines Abstands (L3) entlang des Abschnitts zwischen den beiden singulären Punkten (Ps), bei denen es sich nicht um den singulären Punkt (Ps) handelt, der den maximalen Krümmungsradius aufweist;
- (413b) Bewerten der Konformität des Abschnitts der gekrümmten Oberfläche durch Vergleichen des im vorhergehenden Schritt gemessenen Abstands (L3) sowie der Differenz des Krümmungsradius (A3) zwischen einerseits dem singulären Punkt (Ps), der den maximalen Krümmungsradius aufweist, und andererseits dem bestimmten Punkt (Pp) der theoretischen Entwicklungskurve (Ct), der die gleiche Position entlang der Oberfläche aufweist, mit vorbestimmten Toleranzschwellenwerten.

7. Verfahren nach einem der vorhergehenden Ansprüche, wobei das Verfahren die folgenden Schritte umfasst:
- (510) Erfassen einer Inversion der Krümmung durch Bestimmen eines Zentrums (ψ) eines Kreises (Ω), der durch drei Messpunkte (P) verläuft, und wenn das Zentrum (ψ) des Kreises (Ω) außerhalb des Abschnitts der gekrümmten Oberfläche liegt;
- (520) Festlegen des Abschnitts der gekrümmten Oberfläche als nicht konform, wenn das Zentrum (ψ) des Kreises (Ω) außerhalb des Abschnitts der gekrümmten Oberfläche liegt.

8. Verfahren zur Kontrolle der Konformität eines Profils einer Vorderkante und/oder einer Hinterkante einer Schaufel (2) einer Turbomaschine, den folgenden Schritt umfassend:
- Durchführen des Verfahrens zur Kontrolle der Konformität des Profils eines Abschnitts einer gekrümmten Oberfläche eines Elements nach einem der Ansprüche 1 bis 7, wobei das Element die Schaufel (2) ist und die gekrümmte Oberfläche die Vorderkante und/oder die Hinterkante der Schaufel (2) umfasst, wobei das Kontrollverfahren an einer Vielzahl von Abschnitten der Schaufel (2) durchgeführt wird, die entlang der Schaufel (2) verteilt sind.

## Claims

1. A method of checking the conformity of a profile of a section of a curved surface of an element of a turbomachine comprising the following steps:
- (100) measuring coordinates of a plurality of measuring points (P) of the section in a reference frame defined for said section;
**characterized in that** the method comprises the following steps:
- (200) calculating from the coordinates of these measuring points (P) the radius of curvature of the section at each of these points, so as to obtain a curve of measured evolution (Cm) of the radius of curvature according to the position of the measuring points (P) along said section;
- (300) compare the curve of measured evolution (Cm) of the radius of curvature obtained in the previous step (200) with a predetermined theoretical evolution curve (Ct) of the radius of curvature of the section, with the following steps
- (310) locating at least one singular point (Ps) in the curve of measured evolution (Cm) of the radius of curvature corresponding to a local extremum of said curve of measured evolution (Cm);
- (320) count the number of singular points (Ps) identified;
- (330) measuring conformity parameters by comparing the singular points (Ps) with particular points (Pp) of the theoretical curve (Ct) of the radius of curvature, the measured parameters and the particular points (Pp) of the theoretical evolution curve (Ct) depending on the number of singular points (Ps) counted in the previous step (320);
- (400) evaluating the conformity of the section of the curved surface from the comparison made in the previous step (300) by (410) evaluating the conformity of the section of the curved surface by comparing the parameters with predetermined values.

2. Method according to claim 1, wherein the calculation of the radius of curvature at a measuring point (Pi) is performed by measuring the radius of a circle passing through said measuring point (Pi) and the two measuring points (Pi+1, Pi+2) that follow said measuring point (Pi) along the section.

3. Method according to claim 1 or 2, in which the step of locating (310) at least one singular point (Ps) comprises the following step:
- (311) discriminating the local extremums located by retaining as a singular point (Ps) only an extremum whose variation in the value of the radius of curvature relative to the neighboring extremums is greater than a predetermined threshold.

4. A method according to any one of the preceding claims, wherein said method comprises the following steps:
- (331) measuring, when a single singular point (Ps) is counted, a difference in radius of curvature (S1) between, on the one hand, the singular point (Ps) and, on the other hand, a particular point (Pp) corresponding to the minimum of the radius of curvature of the curve of theoretical evolution (Ct) of the radius of curvature;
- (411) assess the conformity of the section of the curved surface by comparing the difference in radius of curvature measured in the previous step (331) with a predetermined tolerance threshold.

5. A method according to any one of the preceding claims, wherein said method comprises the following step:
- (412) establishing, when only two singular points (Ps) are counted, the section of the curved surface as non-conforming.

6. Method according to any one of the preceding claims, wherein said method comprises the following steps:
- (333a) measuring, when only three singular points (Ps) are counted, a difference in radius of curvature (A3) between, on the one hand, a singular point (Ps) among said three singular points (Ps) having the maximum radius of curvature, and, on the other hand, a particular point (Pp) corresponding to the point of the theoretical evolution curve (Ct) having the same position along the section as the singular point (Ps) having the maximum radius of curvature;
- (333b) compare this difference in radius of curvature (A3) with a predetermined threshold value;
- (333c) if the difference in radius of curvature (A3) is less than the threshold value, measure the following parameters:
* a distance (L2) along the section between, on the one hand, a singular point (Ps) among the three singular points (Ps) having the minimum radius of curvature, and, on the other hand, a particular point (Pp) having the minimum radius of curvature of the theoretical evolution curve (Ct) ;
* a sign of a difference in radius of curvature (Dr) between, on the one hand, the singular point (Ps) with the minimum radius of curvature and, on the other hand, the particular point (Pp) with the minimum radius of curvature;
* a difference in radius of curvature (A2) between, on the one hand, the singular point (Ps) having the minimum radius of curvature and, on the other hand, a particular point (Pp) corresponding to the point of the theoretical evolution curve (Ct) having the same position along the section as the singular point (Ps) having the minimum radius of curvature;
- (413a) evaluate the conformity of the section of the curved surface by comparing the distance (L2), the difference in radius of curvature (A2), and the sign of the difference in radius of curvature (Dr) measured in the previous step (333c) with predetermined tolerance thresholds;
- (333d) if the difference in radius of curvature (A3) is greater than the threshold value, measure a distance (L3) along the section between the two singular points (Ps) other than the singular point (Ps) with the maximum radius of curvature;
- (413b) evaluate the conformity of the section of the curved surface by comparing the distance (L3) measured in the previous step, as well as the difference in radius of curvature (A3) between, on the one hand, the singular point (Ps) having the maximum radius of curvature and, on the other hand, the particular point (Pp) of the theoretical evolution curve (Ct) having the same position along the surface, with predetermined tolerance thresholds.

7. Method according to any one of the preceding claims, wherein said method comprises the following steps:
- (510) detecting a curvature inversion by determining a center (ψ) of a circle (Ω) passing through three measurement points (P) and whether said center (ψ) of the circle (Ω) is located outside the section of the curved surface;
- (520) establish the section of the curved surface as non-conforming if the center (ψ) of the circle (Ω) is located outside the section of said curved surface.

8. Method for checking the conformity of a profile of a leading edge and/or trailing edge of a blade (2) of a turbomachine comprising the following step:
- carrying out the method of checking the conformity of the profile of a section of a curved surface of an element according to any one of claims 1 to 7, wherein the element is the blade (2) and said curved surface comprises the leading edge and/or trailing edge of said blade (2), said checking method being carried out on a plurality of sections of said blade (2) distributed along said blade (2).
